# EUROPÄISCHE PATENTSCHRIFT

(11) **EP 0 578 144 B1**
(45) Veröffentlichungstag und Bekanntmachung des Hinweises auf die Patenterteilung: **07.01.1998**
(21) Anmeldenummer: 93110562.1
(22) Anmeldetag: 02.07.1993
(51) Int. Cl.: C08G 77/26, C08G 77/46, D06M 15/647

(54) **Organosiloxane mit Stickstoff enthaltenden und mit Ethergruppierungen enthaltenden Resten**
Organosiloxanes having nitrogen-containing residues and ether groups-containing residues
Organosiloxanes ayant des restes contenant de l'azote et des restes contenant des groupes éther

(30) Priorität: 09.07.1992 DE 4222483
(43) Veröffentlichungstag der Anmeldung: 12.01.1994
(73) Patentinhaber: Pfersee Chemie GmbH, 86460 Langweid a. Lech (DE)
(72) Erfinder: Chrobaczek, Harald, Dr., D-86153 Augsburg (DE); Görlitz, Ingo, D-86152 Augsburg (DE); Messner, Michael, D-86420 Diedorf (DE)

(56) Entgegenhaltungen:
- FR-A- 2 302 323
- JP-A-52 103 423

## Beschreibung

Die Erfindung betrifft Organooligo- oder Organopolysiloxane, welche neben einem oder mehreren stickstoffhaltigen Resten noch einen Rest aufweisen, der eine Oligo- oder Polyoxyalkylenkette enthält, wobei mindestens ein Teil der Oxyalkylengruppen Oxyethylengruppen sind. Sie betrifft ferner ein Verfahren zur Herstellung solcher Siloxane, wäßrige Dispersionen oder Lösungen, welche sie enthalten und deren Verwendung zur Behandlung von Fasermaterialien.

Es ist bekannt, Fasermaterialien wie z.B. Gewebe, Gewirke oder nichtgewebte Flächengebilde (non-wovens) mit Zusammensetzungen zu behandeln, welche Organooligo- oder Organopolysiloxane enthalten. Diese Zusammensetzungen sind im Normalfall Lösungen oder Dispersionen, vorzugsweise wäßrige Dispersionen der entsprechenden Siloxane. Auch Stickstoff enthaltende Organopolysiloxane wurden bereits zur Behandlung von Fasermaterialien eingesetzt; insbesondere, wenn weicher Griff von mit Polysiloxanen behandelten Textilien erzielt werden soll, haben sich Aminogruppen enthaltende Organopolysiloxane bewährt. Die hierfür verwendeten Siloxane können Aminogruppen und/oder Amidogruppen enthaltende Produkte sein, wie sie beispielsweise in der EP-A 138 192, der EP-A 342 830, EP-A 342 834 und der WO 88/08436 beschrieben sind. Unter bestimmten Voraussetzungen können Dispersionen solcher N-haltiger Polysiloxane in Form besonders stabiler wäßriger Mikroemulsionen erhalten werden; dies ist in EP-A 138 192 und in WO 88/08436 beschrieben.

Amino- bzw. Amidogruppen enthaltende Polysiloxane können nach bekannten Verfahren z.B. dadurch erhalten werden daß man ein Silan, in dem zwei reaktive Gruppen, z.B. Alkoxygruppen, und ein eine Amino- bzw. Amidogruppe enthaltender Rest R an ein Si-Atom gebunden sind, mit einem cyclischen Siloxan umsetzt. Als cyclische Siloxane kommen unter anderem Hexamethylcyclotrisiloxan oder Octamethylcyclotetrasiloxan in Frage. Das Blockieren der Kettenenden der entstehenden Produkte erfolgt häufig durch Trimethylsilylgruppen. Bei bekannten Verfahren wird hierzu der Reaktionsmischung Hexamethyl-disiloxan (CH₃)₃ SiO Si(CH₃)₃ zugesetzt. Diese Methode der Terminierung der Polysiloxankette weist jedoch den Nachteil auf, daß mit dem leicht entzündlichen Hexamethyldisiloxan gearbeitet werden muß und daher entsprechende Sicherheitsmaßnahmen erforderlich sind. Darüber hinaus wird bei bekannten, nur Amino- bzw. Amidogruppen als funktionelle Gruppen enthaltenden, Polysiloxanen der hydrophile/hydrophobe Charakter durch den Stickstoff enthaltenden Rest bestimmt und ist nur schwer gezielt zu beeinflussen.

Häufig werden Polysiloxane, welche Amino- und/oder Amidogruppen enthalten, mit Hilfe nichtionogener Dispergatoren in Wasser dispergiert, um zu Emulsionen zu gelangen. Die hierfür verwendeten Dispergatoren sind beispielsweise Polyoxyalkylengruppen, insbesondere Polyoxyethylengruppen, enthaltende Verbindungen. Um zu stabilen Dispersionen zu gelangen, sind häufig erhebliche Mengen an Dispergatoren nötig, insbesondere dann, wenn Mikroemulsionen hergestellt werden sollen. Dies führt neben Kosten und Ökologieproblemen auch noch zu dem Nachteil, daß die mit den Dispersionen behandelten Textilien keine optimalen Reibechtheiten aufweisen.

Der vorliegenden Erfindung lag daher die Aufgabe zugrunde, Amino- und/oder Amidogruppen enthaltende Organooligo- bzw. Organopolysiloxane zur Verfügung zu stellen, die aus Ausgangsstoffen hergestellt werden können, welche schwerer entzündlich sind als die im Fall der Herstellung bekannter Polysiloxane verwendeten, deren hydrophiler / hydrophober Charakter gezielt beeinflußt werden kann und die mit vergleichsweise geringen Mengen von Dispergatoren in stabile wäßrige Dispersionen überführt werden können.

Die Aufgabe wurde gelöst durch Stickstoff enthaltende Organooligo- oder Organopolysiloxane der allgemeinen Formel (I) 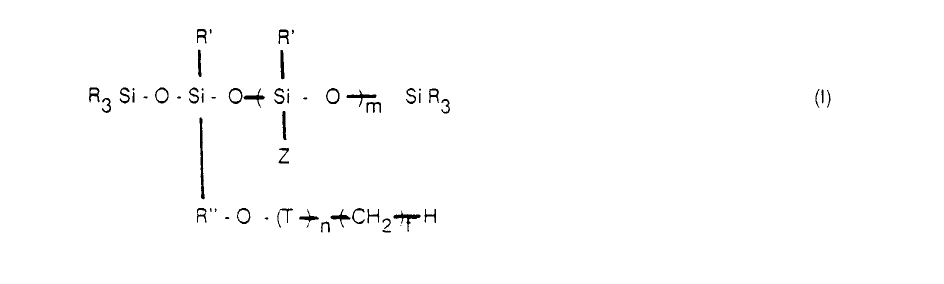
worin jeder Rest R entweder ein Methyl- oder ein Phenylrest ist,
worin R'' für einen zweiwertigen, unverzweigten oder verzweigten organischen Rest mit 1 bis 6 C-Atomen, vorzugsweise für einen gesättigten Alkylenrest, insbesondere für 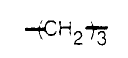 steht,
n eine Zahl von 5 bis 25 ist
m eine Zahl von 20 bis 1500 ist
f den Wert 0 oder 1 hat,
worin 60 bis 100 % aller anwesenden Reste T für -CH₂-CH₂ - O - und 0 bis 40 % aller anwesenden Reste T für 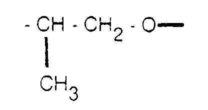 oder für 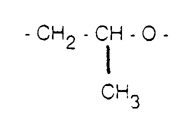 stehen,
alle Reste Z unabhängig voneinander entweder für R' oder für R''' oder für R^{IV} oder für R^{V} stehen, wobei R''' ein Rest der allgemeinen Formel (II a) oder (II b) und R^{IV} ein Rest der allgemeinen Formel (III) ist, 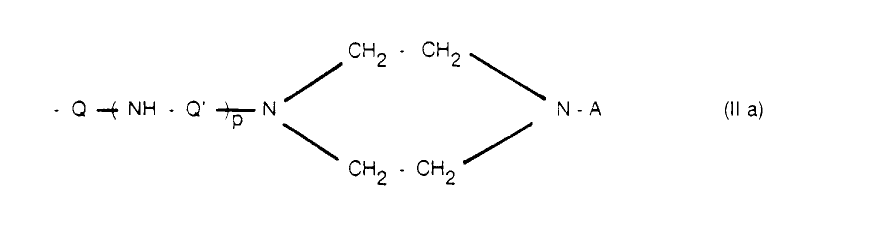 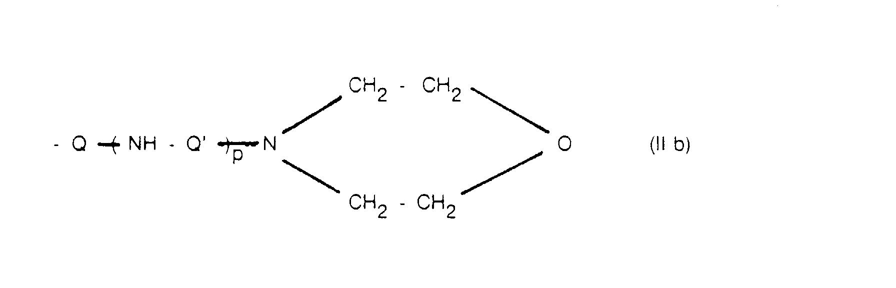 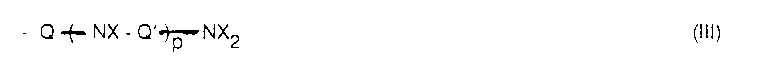
wobei A für Wasserstoff oder eine Alkylgruppe mit 1 bis 4 C-Atomen steht, worin Q und Q' jeweils für einen zweiwertigen unverzweigten oder verzweigten Alkylenrest mit 1 bis 4 C-Atomen stehen, worin p = 0 oder 1 ist und worin alle anwesenden Reste X unabhängig voneinander für Wasserstoff, einen, gegebenenfalls eine oder mehrere Hydroxylgruppen als Substituenten aufweisenden, Alkylrest mit 1 bis 6 C-Atomen, den Cyclohexylrest oder für den Rest - CO - Y stehen, wobei Y ein aliphatischer Rest mit 1 bis 6 C-Atomen ist. der eine oder mehrere Hydroxylgruppe als Substituenten aufweisen kann, wobei R^{V} ein Rest der Formel 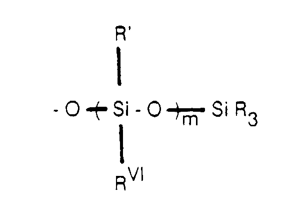 oder der Formel 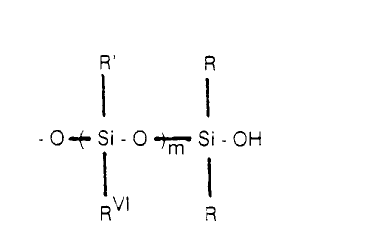 ist, worin alle anwesenden Reste R^{VI} unabhängig voneinander für R', R''', R^{IV} oder R^{V} stehen, mit der Maßgabe, daß mindestens einer der anwesenden Reste Z oder R^{VI} für einen Rest R''' oder für einen Rest R^{IV} steht,
wobei alle Reste R' jeweils für einen Rest R^{V} oder für einen Phenylrest oder Alkylrest mit 1 bis 4 C-Atomen, vorzugsweise für einen Methylrest oder Ethylrest stehen.

Die erfindungsgemäßen Organooligo- oder Polysiloxane weisen folgende Vorteile auf:
1. Sie lassen sich aus Ausgangssubstanzen herstellen, die wesentlich weniger kritisch bezüglich Entzündbarkeit sind als das bisher für die Kettenterminierung (von Stickstoff enthaltenden Polysiloxanen) vielfach verwendete Hexamethyldisiloxan bzw. ähnliche kurzkettige Si-Verbindungen. Diese bezüglich Entzündbarkeit wesentlich vorteilhafteren Produkte, die für die Herstellung erfindungsgemäßer Siloxane eingesetzt werden können, werden unten näher beschrieben.
2. Die Menge an Dispergator, die nötig ist, um die erfindungsgemäßen Siloxane in stabile wäßrige Dispersionen zu überführen, kann niedriger gehalten werden als im Fall von Polysiloxanen, die nur Amino- bzw. Amidogruppen, jedoch keine Gruppierungen 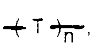 d.h. keine Polyoxyalkylengruppen aufweisen. Dies führt zu Ökologievorteilen und zu verbesserten Reibechtheiten von mit erfindungsgemäßen Produkten behandelten Fasermaterialien, wie insbesondere Textilien. In speziellen Fällen kann auf den Zusatz von Dispergatoren ganz verzichtet werden, nämlich dann, wenn die erfindungsgemäßen Siloxane auf Grund entsprechender Substituierung bereits als solche wasserlöslich oder selbstemulgierend sind. Vielfach neigen Dispersionen oder Lösungen erfindungsgemäßer Polysiloxane auch weniger zur Schaumbildung als Emulsionen amido- bzw. aminofunktioneller Polysiloxane, welche keine Gruppen 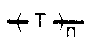 aufweisen und welche mittels größerer Mengen hinzugefügter nichtionischer Emulgatoren emulgiert worden sind. Diese verminderte Schaumbildung im Fall von Dispersionen erfindungsgemäßer Produkte kann erhebliche Verarbeitungsvorteile mit sich bringen.
3. Die hydrophilen Eigenschaften erfindungsgemäßer Produkte lassen sich in einfacher Weise gezielt einstellen. Dies kann durch Variation der Anzahl der -CH₂- CH₂ -O-Einheiten (Wert von n in Formel (I)) geschehen, indem man bei einem Herstellungsverfahren gemäß Anspruch 10, wie es unten näher beschrieben wird, von entsprechenden Ausgangsprodukten ausgeht. So ist es außerdem möglich, durch Auswahl geeigneter Werte für die Anzahl n der -CH₂ -CH₂-O-Einheiten (T), (von denen ein Teil durch Polyoxypropyleneinheiten ersetzt sein kann) den Griff von Textilien, die mit erfindungsgemäßen Produkten behandelt wurden, zu beeinflussen. Neben der Auswahl geeigneter Werte für die Anzahl n dieser genannten Einheiten ist diese gezielte Beeinflussung der Eigenschaften auch noch auf eine andere Art möglich, nämlich durch Einhaltung bestimmter Mengenverhältnisse der Ausgangssubstanzen relativ zueinander bei der Herstellung der erfindungsgemäßen Siloxane. Da die bei einem Verfahren gemäß Anspruch 10 entstehenden Produkte immer nur einen Rest 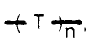 der -CH₂ -CH₂-O-Einheiten enthält, aufweisen, läßt sich über Erhöhung der Menge an eingesetztem stickstoffhaltigem Silan der durch -CH₂ -CH₂-O-Einheiten bewirkte hydrophile Charakter beeinflussen. Insbesondere dann, wenn ein besonders weicher Griff entsprechend behandelter Textilien gefordert wird, kann durch Verringerung des Anteils an -CH₂- CH₂O-Einheiten, bezogen auf Gesamtprodukt, den Anforderungen genügt werden; es lassen sich hierbei Produkte erhalten, die behandelten Textilien angenehmeren Griff verleihen als handelsübliche Produkte ("Kammtenside"), welche an mehreren Si-Atomen des gleichen Moleküls Reste mit -CH₂ -CH₂-O-Einheiten und insgesamt hohen Anteil an solchen Einheiten aufweisen.
4. Gegenüber bekannten sogenannten "Kammtensiden", das sind Produkte, welche an mehreren Si-Atomen ein und derselben Polysiloxankette Reste aufweisen, welche Polyoxyethylengruppen enthalten (wobei diese Gruppen beispielsweise über Alkylengruppen an die betreffenden Si-Atome gebunden sind), besitzen erfindungsgemäße Polysiloxane den Vorteil, daß sie den damit behandelten Textilien einen weicheren Griff bei gleichzeitig verbesserter Permanenz der Effekte gegenüber Waschprozessen verleihen.
5. Vielfach lassen sich erfindungsgemäße Siloxane sehr leicht in besonders vorteilhafte stabile wäßrige Mikroemulsionen überführen. Diese feinteiligen Mikroemulsionen, die sich nach bekannten Methoden herstellen lassen (wie in EP-A 138 192, WO 88/08436 beschrieben) sind anwendungstechnisch besonders günstig. Mit erfindungsgemäßen Siloxanen lassen sich darüber hinaus auch Mikroemulsionen herstellen, die zusätzlich Fettsäure-N-alkanolamide enthalten und die zu besonders weichem und vollem Griff von damit behandelten Fasermaterialien wie z.B. Textilien führen.
6. Für den Fail der bevorzugten Ausführungsform (Anspruch 3), bei der wäßrige Dispersionen vorliegen, die neben erfindungsgemäßen Siloxanen noch eine oder mehrere Verbindungen der Formel R^{a}-CH(R^{b})-R^{c}-O-R^{d} enthalten, lassen sich diese Dispersionen mit hohem Gehalt (teilweise bis zu 80 Gew.%) an Siloxan erhalten; trotz dieses hohen Wirkstoffanteils sind diese Dispersionen, ohne daß Probleme auftreten, mit Wasser verdünnbar. Die hochkonzentrierten Dispersionen sind u.a. wegen Verringerung von Transportkosten vorteilhaft.

Die erfindungsgemäßen Organooligo- oder Organopolysiloxane enthalten Stickstoff und werden durch die oben und in Anspruch 1 angegebene Formel (I) dargestellt. Je nach dem Wert von m in dieser Formel spricht man eher von Oligo- oder von Polysiloxanen. Der Wert von m liegt in jedem Fall bei 20 bis 1500, vorzugsweise bei 100 bis 750. Die Enden der Hauptketten erfindungsgemäßer Siloxane werden jeweils durch R₃ Si-Gruppen gebildet. Für den Fall, daß die erfindungsgemäßen Siloxane Reste R^{V} enthalten, also verzweigte Oligo- oder Polysiloxane sind, welche auch in Seitenketten Si-Atome aufweisen, können die Enden der Seitenketten ebenfalls durch R₃Si-Einheiten gebildet werden; die Seitenketten können aber auch durch R₂Si-OH-Einheiten terminiert sein. Die sechs oder mehr in den erfindungsgemäßen Siloxanen insgesamt anwesenden Reste R sind alle unabhängig voneinander entweder Methyl- oder Phenylreste. An jedes Siliciumatom innerhalb der Siloxankette ist mindestens ein Rest R' gebunden, es können jedoch auch mehrere Si-Atome in der Kette vorliegen, an die jeweils zwei Reste R' gebunden sind; dies ist bevorzugt und normalerweise der Fall, denn nur in Ausnahmefällen sind alle Reste Z (siehe Formel (I)) von R' verschieden, d.h. nur in seltenen Ausnahmefällen stehen alle Reste Z für R''' oder R^{IV} oder R^{V}.
Alle Reste R' stehen unabhängig voneinander für Reste R^{V} der genannten Art, für Phenylreste oder Alkylreste mit 1 bis 4 Kohlenstoffatomen, insbesondere stehen bevorzugt 70 % bis 100 % aller Reste R' für Methylreste. Besonders bevorzugt sind Produkte, bei denen alle Reste R und alle Reste R' sowie alle Reste Z, die nicht für R''' oder R^{IV} oder R^{V} stehen, Methylreste sind. Neben den genannten Resten R und R' enthalten die erfindungsgemäßen Siloxane genau eine Gruppierung der Formel 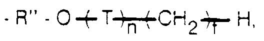 wobei der zweiwertige Rest R'' dieser Gruppierung an das zweite (bzw. das vorletzte) Siliciumatom der Siloxanhauptkette gebunden ist. Der Rest R'' steht für einen zweiwertigen verzweigten oder unverzweigten organischen Rest mit 1 bis 6 Kohlenstoffatomen, vorzugsweise ist er ein gesättigter Alkylenrest, insbesondere der Formel (̵ CH₂ -)ₛ mit s = 1 bis 6, besonders bevorzugt steht R'' für 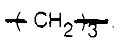 Die Zahl n in der erwähnten Gruppierung gibt die Anzahl der (̵ T )̵ Einheiten wieder und liegt im Bereich von 5 bis 25. Vorzugsweise liegt n im Bereich von 10 bis 20. Die an das zweite Si-Atom der Siloxankette gebundene Gruppierung (̵ T )̵ enthält Polyoxyethyleneinheiten und ggf. zusätzlich Polyoxypropyleneinheiten. Selbstverständlich ist der Wert von n ein Durchschnittswert, denn bei der Herstellung von Polyoxyalkylengruppen enthaltenden Verbindungen tritt immer eine gewisse Kettenlängenverteilung auf. An das zweite (bzw. vorletzte) Si-Atom der erfindungsgemäßen Polysiloxane ist über R'' eine Polyoxyalkylengruppen 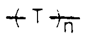 enthaltende Einheit gebunden. Diese Einheit muß Polyoxyethylen (EO-)-gruppen enthalten, und zwar müssen mindestens 60 % aller anwesenden Gruppen T Polyoxyethylengruppen sein. Die restlichen 40 % können ebenfalls Polyoxyethylengruppen sein, ein Teil oder alle dieser restlichen Gruppen T können jedoch auch Polyoxypropylen (PO-)-gruppen sein. Liegen in einer Seitenkette 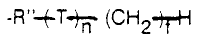 sowohl EO- als auch PO-Einheiten vor, so können diese willkürlich (random) oder in Form von Blöcken verteilt sein. Vorzugsweise sind 100 % aller Einheiten T Polyoxyethylengruppen.
Die über -R"O- an das zweite Si-Atom der Siloxankette gebundene, (̵ CH₂CH₂O)̵Einheiten enthaltende, Gruppierung weist am anderen Ende eine Hydroxy- oder eine Methoxygruppe auf (f in Formel (I) ist 0 oder 1). Die erfindungsgemäßen Oligo- oder Polysiloxane können auch in Form eines Gemischs von Verbindungen vorliegen, in dem bei einem Teil der Moleküle f = 0 und bei einem anderen Teil f = 1 ist, also eine Teilveretherung mit Methylgruppen vorliegt.

In den erfindungsgemäßen Siloxanen sind an alle Siliciumatome der Hauptkette mit Ausnahme der beiden endständigen und eines der beiden daran anschließenden Si-Atome je ein Rest R' der oben beschriebenen Art und ein Rest Z gebunden. Für den Fall, daß die erfindungsgemäßen Siloxane verzweigt sind, also Si-haltige Seitenketten aufweisen, wird diejenige - durch 2 R₃Si-Gruppen terminierte - Kette als Hauptkette bezeichnet, welche das Si-Atom enthält, an das 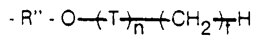 gebunden ist.

Alle Reste Z stehen unabhängig voneinander für einen Rest R' der oben beschriebenen Art oder für einen Rest R''' oder für einen Rest R^{IV} oder für einen Rest R^{V}. Bevorzugt stehen alle Reste Z entweder für R' oder R''' oder R^{IV}. Mindestens einer der Reste Z muß jedoch für einen Rest R''' oder R^{IV} stehen, außer in denjenigen Fällen, wo mindestens ein Rest R^{V} (Si-Atome enthaltende Seitenkette) und damit auch mindestens ein Rest R^{VI} (der oben beschriebenen Art) vorliegt, der für einen Rest R''' oder R^{IV} steht. Die Forderung, wonach mindestens einer von allen anwesenden Resten Z oder R^{VI} für einen Rest R''' oder R^{IV} stehen muß, bedeutet, daß die erfindungsgemäßen Siloxane mindestens einen stickstoffhaltigen Rest enthalten müssen, der unter die Formel (II a) oder (II b) (Rest R''') oder die Formel III (Rest R^{IV}) fällt. Es können jedoch auch mehrere solcher Reste der Formel (II a) bzw. (II b) und/oder der Formel III vorliegen. Als besonders geeignet für die Behandlung von Fasermaterialien haben sich solche erfindungsgemäßen Siloxane erwiesen, in denen alle Reste Z für R' oder R^{IV} stehen (mindestens einer davon für R^{IV})
Einer oder mehrere der Reste Z können für einen Rest R^{V} der Formel 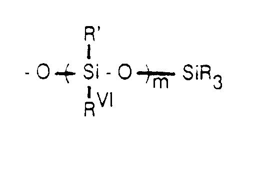 oder der Formel 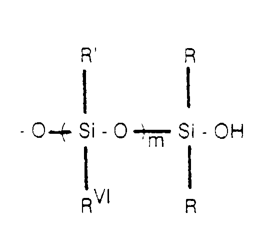 stehen. Für den (allerdings nicht besonders bevorzugten) Fall, daß keiner der Reste Z für einen stickstoffhaltigen Rest R''' oder R^{IV} steht, muß mindestens einer der anwesenden Reste Z für einen Rest R^{V} stehen, und es muß in diesem Fall mindestens einer der (in Resten R^{V}) anwesenden Reste R^{VI} für einen Rest R''' oder R^{IV}, d.h. für einen stickstoffhaltigen Rest der Formel (II a) bzw. (II b) oder der Formel III stehen.

Alle anwesenden Reste R^{VI} stehen unabhängig voneinander für einen Rest R', einen Rest R''', einen Rest R^{IV} oder einen Rest R^{V} der beschriebenen Art. Auf jeden Fall muß gewährleistet sein, daß in den erfindungsgemäßen Siloxanen mindestens ein Rest Z oder ein Rest R^{VI} vorliegt, der für einen stickstoffhaltigen Rest R''' der Formel (II a) bzw. (II b) oder einen Rest R^{IV} der Formel III steht.

Die Tatsache, daß einer oder mehrere der Reste Z für einen Rest R^{V} stehen können, bedeutet, daß ein verzweigtes Polysiloxan vorliegen kann. Da die in der Verzweigung enthaltenen Si-Atome Reste R^{VI} enthalten, welche wiederum Reste R^{V} sein können, besteht also die Möglichkeit, daß die erfindungsgemäßen Siloxane Si-haltige Seitenketten aufweisen, die ihrerseits wiederum verzweigt sind. Die in obiger Formel für den Rest R^{V} angegebenen Bezeichnungen R, R' und m besitzen die gleiche Bedeutung, wie sie in Anspruch 1 und für Formel (I) angegeben ist. Für den Fall, daß R^{V} ein Rest (der oben angegebenen Formel) ist, in dem Si-OH-Einheiten vorliegen, können diese OH-Gruppen für Vernetzungsreaktionen herangezogen werden.

Die Anzahl m der Gruppierungen - Si(R') (Z) - O - in den erfindungsgemäßen Siloxanen liegt im Bereich von 20 bis 1500, vorzugsweise im Bereich von 100 bis 750. Sie läßt sich über die Reaktionsbedingungen, z.B. über die Mengenverhältnisse an eingesetzten Ausgangsverbindungen, bei der Herstellung der Siloxane einstellen. Für den Fall, daß Reste R^{V} anwesend sind, sollten das Ausmaß der Verzweigung und die Anzahl der insgesamt vorliegenden Si-Atome zweckmäßigerweise dort ihre Obergrenze finden, wo aus Gründen zu hoher Viskositäten der Produkte ihre Handhabung schwierig wird. Vorzugsweise beträgt bei Anwesenheit von Si-enthaltenden Seitenketten die Summe der beiden Werte von m (Haupt- und Seitenkette) nicht mehr als 1500, insbesondere nicht mehr als 750.

Einer oder mehrere der Reste Z in den erfindungsgemäßen Siloxanen stehen für einen Rest R''' oder für R^{IV} oder R^{V}. Alle anwesenden Reste R''' stehen für einen Rest der nachfolgend angegebenen Formel (II a) oder (II b), alle Reste R^{IV} für einen Rest der Formel III. Erfindungsgemäße Siloxane, in welchen mehrere voneinander verschiedene Reste R''' oder R^{IV} vorliegen, können z.B. erhalten werden, indem man bei ihrer Herstellung nach einem Verfahren, wie es unten beschrieben wird, ein Gemisch unterschiedlicher Dialkoxy-aminosilane einsetzt. Jeder Rest R''' ist ein Rest der Formel (II a) 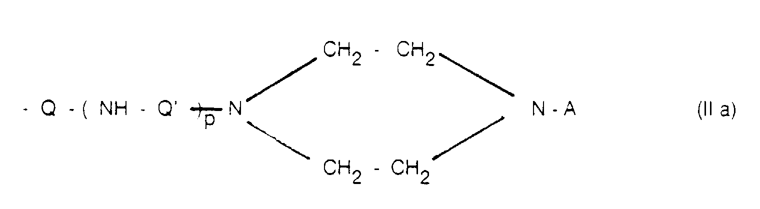 oder der Formel 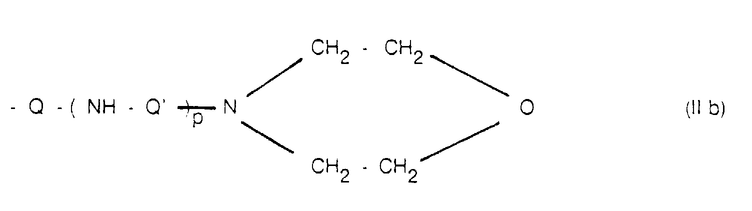 und jeder Rest R^{IV} ist ein Rest der Formel (III) 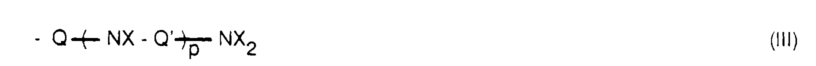 In diesen Formeln steht A für Wasserstoff oder eine Alkylgruppe mit 1 bis 4 Kohlenstoffatomen, insbesondere für eine Methylgruppe. Q und Q' stehen jeweils für einen zweiwertigen, verzweigten oder unverzweigten Alkylenrest mit 1 bis 4 C-Atomen, vorzugsweise jeweils für einen gesättigten Alkylenrest mit 2 bis 4 C-Atomen. Der Index p steht für 0 oder 1, und alle anwesenden Reste X stehen unabhängig voneinander entweder für Wasserstoff, einen Alkylrest mit 1 bis 6 C-Atomen, der eine oder mehrere Hydroxylgruppen als Substituenten aufweisen kann, den Cyclohexylrest oder für den Rest - CO-Y. Im letztgenannten Fall (X = -CO-Y) handelt es sich also um Siloxane mit Amidogruppen enthaltenden Seitenketten. Solche Amidogruppen enthaltende (Poly)siloxane sind vielfach vorteilhaft, weil sie zu keiner oder nur geringer Vergilbung von damit behandelten Textilien führen; ähnliche Vorteile erhält man mit Piperazinogruppen oder Morpholineinheiten enthaltenden Siloxanen (Formel II(a)) und (II b). Amidogruppen enthaltende erfindungsgemäße Polysiloxane (X = -CO-Y) können z.B. dadurch erhalten werden, daß man nach dem unten beschriebenen Verfahren Dialkoxyaminosilane der Formel (R'O)₂Si (R')(̵CH₂-)₃-NH(̵CH₂)₂-NH₂ mit Hexamethylcyclotrisiloxan und einem Polyoxyethylengruppen enthaltenden Silan (Komponente c) des unten beschriebenen Verfahrens) miteinander umsetzt und anschließend die endständigen primären und/oder sekundären Aminogruppen, die in den Seitenketten anwesend sind, in Amidogruppen überführt. Dies kann mittels eines Lactons, z.B. Butyrolacton, oder mittels eines Carbonsäureanhydrids, z.B. Acetanhydrid, nach bekannten Methoden (EP-A 342 830 und EP-A 342 834) erfolgen. Im Fall der Reaktion mit Butyrolacton entstehen hierbei Produkte, in welchen der Rest Y eine endständige Hydroxylgruppe aufweist.
Wenn X für -CO-Y steht, stellt Y einen aliphatischen Rest mit 1 bis 6 Kohlenstoffatomen dar. Dieser Rest kann eine oder mehrere Hydroxylgruppen als Substituenten aufweisen, insbesondere sind Produkte bevorzugt, die am endständigen C-Atom eine Hydroxylgruppe als Substituenten aufweisen. Polysiloxane mit Amidogruppen enthaltenden Resten sind in EP-A 342 830 und in EP-A 342 834 beschrieben. Die dort angegebenen Strukturen für die an Si-Atome gebundenen, Amidogruppen enthaltenden, Reste sind auch für die erfindungsgemäßen Siloxane als Reste R^{IV} geeignet. Die Aminogruppen, jedoch keine Amidogruppen enthaltenden, an Si-Atome gebundenen Reste, welche in EP-A 138 192 und WO 88/08436 genannt sind, eignen sich ebenfalls als Reste R^{IV} für erfindungsgemäße Siloxane.
Erfindungsgemäße Polysiloxane, in denen ein Rest R^{IV} anwesend ist und in denen X für -CO-Y steht, können auch erhalten werden, indem man bei der oben genannten Umsetzung von Aminogruppen an Stelle Butyrolacton andere Lactone verwendet, welche mehrere Hydroxylgruppen aufweisen. Eine hierzu geeignete Variante ist die Umsetzung der genannten, Aminogruppen und Polyoxyethylengruppen enthaltenden Oligo- bzw. Polysiloxane mit Delta-Gluconolacton. In diesem Fall entstehen Produkte, in welchen X für CO-Y steht und Y mehrere Hydroxygruppen aufweist, nämlich Produkte, in denen Y für -(CHOH)₄ - CH₂OH steht.

Erfindungsgemäße Siloxane, in denen einer oder mehrere Reste X für einen Alkylrest stehen, welcher eine Hydroxylgruppe als Substituenten enthält, lassen sich z.B` erhalten, indem man an Stelle der oben beschriebenen Addition von Lacton Ethylenoxid an die entsprechenden primären und/oder sekundären Aminogruppen addiert, was zu Monoethanolamin- oder Diethanolaminderivaten führt. An Stelle von Ethylenoxid lassen sich auch Derivate davon einsetzen, z.B. ein durch eine -CH₂OH-Gruppe substituiertes Ethylenoxid.
Wie bereits erwähnt, steht im Normalfall in den erfindungsgemäßen Siloxanen (siehe Formel (I)) nur ein Teil der Reste Z jeweils für einen Rest R''' oder R^{IV} oder R^{V}, d`h. normalerweise steht ein Teil der Reste Z jeweils für einen Rest R' wobei es bevorzugt ist, daß 70 bis 100 % aller Reste R' Methylgruppen sind. Es ist auch möglich, daß alle Reste Z außer einem für R' stehen, wobei R' die oben und in Anspruch 1 genannte Bedeutung besitzt, wobei es bevorzugt ist, daß 70 bis 100 % aller Reste R' Methylgruppen sind. Besonders bevorzugte erfindungsgemäße Siloxane sind dadurch gekennzeichnet, daß 25 bis 95 % aller anwesenden Reste Z Methylgruppen sind und die übrigen Reste Z Reste R''' oder R^{IV} der Formel (II a) oder (II b) oder (III) sind. Insbesondere sind Produkte der Formel 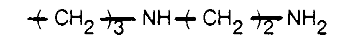 oder der Formel 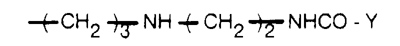 oder der Formel 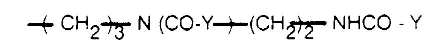 oder der Formel 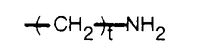 bevorzugt, wobei t für 2 oder 3 steht.

Y besitzt hierbei die oben genannte Bedeutung. Welcher Anteil der Reste Z Methylgruppen sind, läßt sich über die Mengenverhältnisse bei der Herstellung der Siloxane steuern.

Eine Reihe erfindungsgemäßer Organooligo- oder Organopolysiloxane lassen sich in vorteilhafter Weise herstellen, indem man in Gegenwart von Wasser, vorzugsweise bei einer Temperatur von 80 bis 130°C
a) ein Stickstoff enthaltendes Silan der Formel 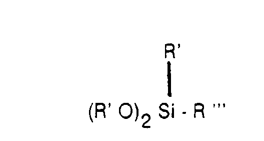 oder der Formel 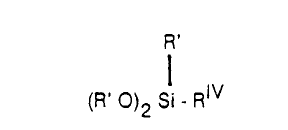
b) ein cyclisches Siloxan der Formel

   (R'₂ Si O)ᵣ

   und
c) ein Silan der Formel 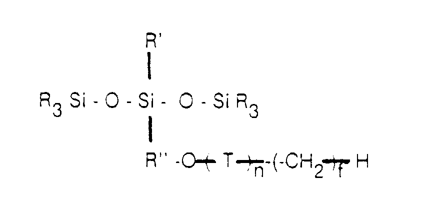 miteinander umsetzt, wobei R, R', R'', R''' T, R^{IV} und n die oben und in Anspruch 1 angegebenen Bedeutungen besitzen, r für 3 oder 4 steht und f den Wert 0 oder 1 hat, mit der Einschränkung, daß in den Silanen gemäß der für Komponente a) angegebenen Formeln die an Sauerstoff gebundenen Reste R' nicht für R^{V} stehen.

Die Umsetzung kann, wenn gewünscht, so durchgeführt werden, daß bereits zu Beginn der Reaktion alle 3 Komponenten a), b) und c) und Wasser im Reaktionsgemisch vorliegen. Bei der Durchführung der Synthese kann es jedoch von Vorteil sein, zuerst nur die Komponenten a) und b) in Gegenwart von Wasser, vorzugsweise unter Mitverwendung eines Katalysators wie z.B. Kaliumhydroxid, miteinander umzusetzen und erst anschließend Komponente c) hinzuzufügen. Hierbei kann z.B. der erste Schritt, d.h. die Umsetzung von a) mit b) bei einer Temperatur im Bereich von 80 bis 90°C erfolgen und der zweite Schritt, d.h. die Umsetzung mit Komponente c) bei einer höheren Temperatur, z.B. bei 100 bis 130°C. In Gegenwart von Wasser wird aus dem R'O-Gruppen enthaltenden Silan (Komponente a)) Alkohol (R'OH) freigesetzt. Die Menge an anwesendem Wasser sollte demnach mindestens so hoch sein, daß alle anwesenden R'O-Gruppen als R'OH abgespalten werden können. Die Umsetzung wird in einer bevorzugten Ausführungsform in Gegenwart einer Base durchgeführt. Als Base kann Alkalimetallhydroxid verwendet werden.
Bei der genannten Synthese kann es oft zweckmäßig sein, keine Amidogruppen enthaltenden Reste R^{IV} einzusetzen, sondern nur Aminogruppen enthaltende Reste R''' oder R^{IV}. Falls in den erfindungsgemäßen Endprodukten Amidogruppen erwünscht sind, lassen sich diese auch nachträglich durch Reaktion einer primären Aminogruppe mit einem Lacton oder einem Carbonsäureanhydrid einführen. Geeignet hierfür sind unter anderem Butyrolacton oder Acetanhydrid.

Die Komponente a) ist ein Silan, in welchem je ein Rest R' und R''' oder R^{IV} der oben genannten Art an das Si-Atom gebunden sind. Außerdem sind zwei Reste R'O, vorzugsweise zwei Alkoxyreste (insbesondere Methoxyreste) oder Phenoxyreste an das Si-Atom gebunden. Diese reaktiven Reste R'O ermöglichen die Umsetzung mit Komponente b), einem cyclischen Siloxan, unter Ringöffnung. Die Komponente c), ein Silan der oben genannten Art, bewirkt die Einführung der Einheit 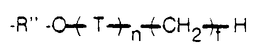 in die erfindungsgemäßen Siloxane, in denen diese Einheit an das zweite Si-Atom der Kette gebunden ist. Durch Komponente c) wird außerdem bewirkt, daß die beiden Kettenenden der erfindungsgemäßen Siloxane jeweils durch R₃Si-Reste gebildet sind. Als Komponente b) besonders geeignet sind cyclische Siloxane, in denen r für 3 oder 4 steht, bevorzugte Beispiele sind (R' = Methyl) Hexamethylcyclotrisiloxan und Octamethylcyclotetrasiloxan. Diese cyclischen Oligosiloxane sind handelsübliche Produkte. Gegebenenfalls kann r jedoch auch höhere Werte als 4 annehmen, z.B. Werte bis zu 10. Als Komponente a) geeignete Produkte, d.h. Produkte der Formeln 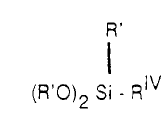 oder 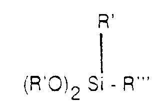 sind auf dem Markt erhältlich, z.B. Dynasylan® 1411 oder Dynasylan® 1505 der Fa. Hüls AG. Marl, DE.
Produkte, die als Komponente c) verwendet werden können, d.h. Produkte der Formel 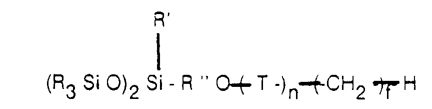 sind ebenfalls handelsüblich, ein Beispiel ist das Produkt Tegopren® 5878 der Fa. Th. Goldschmidt AG, Essen, DE.

Daneben lassen sich Produkte, die als Komponente a) bzw. als Komponente c) geeignet sind, nach aus der Siliciumchemie bekannten Methoden herstellen.

Über die Mengenverhältnisse der Komponenten a) b) und c) relativ zueinander läßt sich bequem die durchschnittliche Kettenlänge (Wert von m in Formel (I)) der erfindungsgemäßen Siloxane steuern, ebenso der Anteil der Reste Z, der für R' steht, relativ zu demjenigen Anteil der Reste Z, der für R''' oder R^{IV} steht. Besonders bevorzugt ist es, das oben und in Anspruch 10 genannte Verfahren so durchzuführen, daß man die Verbindungen a) b) und c) in solchen Mengenverhältnissen umsetzt, daß pro Mol an Komponente a) 1 bis 40 Mol Komponente b) und 0,5 bis 2 Mol Komponente c) eingesetzt werden.

Die durchschnittliche Kettenlänge läßt sich auch über den Zeitpunkt der Zugabe der Komponente c) (Terminierung) steuern.
Vorzugsweise wird das Verfahren bei einer Temperatur im Bereich von 80 bis 130°C durchgeführt, wobei für den Fall, daß man das Verfahren in der oben beschriebenen Weise in zwei Stufen durchführt, die Temperatur der ersten Stufe anders, z.B. um ca. 20°C tiefer liegen kann als die Temperatur der zweiten Stufe.

Erfindungsgemäße Organooligo- oder Polysiloxane lassen sich außer durch das oben beschriebene besonders bevorzugte Verfahren auch in günstiger Weise folgendermaßen herstellen: Man ersetzt bei dem oben beschriebenen Verfahren Komponente b) (cyclisches Oligosiloxan) durch ein offenkettiges Siloxan, das an beiden Enden je eine reaktive Gruppe aufweist. Geeignet hierfür sind beispielsweise lineare Oligosiloxane der Struktur 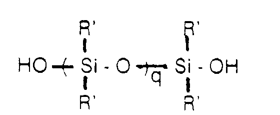 R' = vorzugsweise CH₃, alle Reste R' können jedoch unabhängig voneinander auch die übrigen oben und in Anspruch 1 genannten Bedeutungen besitzen mit der Einschränkung, daß sie nicht für R^{V} stehen. Der Wert von q ist vorzugsweise 2 bis 5, kann jedoch, wenn gewünscht, auch größer sein.

Führt man das Verfahren in der angegebenen Weise durch, nämlich mit einem offenkettigen statt einem cyclischen Siloxan als Komponente b), so setzt man vorzugsweise die Komponenten a), b) und c) in den oben und in Anspruch 11 genannten molaren Mengenverhältnissen ein, jedoch mit folgender Änderung: Anstatt generell 1 bis 40 Mol Komponente b) pro 1 Mol Komponente a) zu verwenden, ist die Kettenlänge bzw. die Anzahl der Si-Atome des offenkettigen Siloxans (Komponente b)) zu berücksichtigen. Wenn dieses Siloxan 3 oder 4 Si-Atome aufweist, verwendet man in Analogie zum Fall des cyclischen Siloxans 1 bis 40 Mol. Enthält das offenkettige Siloxan mehr Si-Atome, so ist die vorzugsweise verwendete Menge an Molen entsprechend geringer. Man verwendet also vorzugsweise so viel Mole an offenkettigem Siloxan pro Mol an Komponente a), daß diese Menge in etwa die gleiche Menge Si-Atome enthält wie 1 bis 40 Mole an cyclischem Tri- bzw.Tetrasiloxan.

Die beiden beschriebenen Verfahrensvarianten, nämlich mit cyclischem oder offenkettigem Oligosiloxan als Ausgangssubstanz, können unter Verwendung von Katalysatoren, vorzugsweise basischen Katalysatoren durchgeführt werden, wie sie für entsprechende Reaktionen aus der Literatur bekannt sind. Geeignete Katalysatoren sind Kaliumhydroxid und Kaliumsilanolate.

Bei dem beschriebenen erfindungsgemäßen Verfahren entstehen Zusammensetzungen, welche die oben und in Anspruch 1 beschriebenen Oligo- oder Polyorganosiloxane als Hauptprodukte enthalten. Daneben entstehen in geringerem Ausmaß Nebenprodukte. Diese müssen im Normalfall vor der Verwendung erfindungsgemäßer Produkte für die Behandlung von Fasermaterialien nicht abgetrennt werden. Dies ist vor allem auch dann von Vorteil, wenn das Reaktionsgemisch nach der Umsetzung in wäßrigem Medium bereits in Form einer wäßrigen Lösung oder Dispersion vorliegt. Gegebenenfalls muß jedoch der pH-Wert dieser Lösung oder Dispersion je nach Anwendungszweck noch eingestellt werden, z.B. durch Neutralisierung von noch anwesendem Alkalimetallhydroxid.

Das oben beschriebene Verfahren eignet sich für die Herstellung von - bevorzugten - Vertretern der erfindungsgemäßen Siloxane, in denen einer oder mehrere der Reste Z für einen Rest R''' oder R^{IV} stehen. Sollen Reste R^{V} in die erfindungsgemäßen Siloxane eingebaut werden, also eine Verzweigung der Siloxankette erzielt werden, so kann dies erreicht werden, wenn man bei dem oben beschriebenen Herstellungsverfahren trifunktionelle Verbindungen (R'O)₃ Si - R' oder (R'O)₃ Si-R''' oder (R'O)₃ Si-R^{IV} zusätzlich mitverwendet.

Falls ein erfindungsgemäßes, bei dem beschriebenen Verfahren als Hauptprodukt entstehendes, Polysiloxan oder Oligosiloxan nicht in Wasser löslich oder selbstdispergierend ist, oder falls erfindungsgemäße wäßrige Zusammensetzungen weitere nicht wasserlösliche Produkte enthalten sollen, empfiehlt sich die Verwendung eines Dispergators oder eines Gemischs mehrerer Dispergatoren. Diese Dispergatoren werden gegebenenfalls dem Reaktionsgemisch bereits vor oder während der Umsetzung nach dem erfindungsgemäßen Verfahren zugesetzt. Sie können auch nach beendeter Umsetzung zugegeben werden, z.B. in der Form, daß dem nach Umsetzung erhaltenen Reaktionsgemisch eine wäßrige Dispersion hinzugefügt wird, welche ein weiteres Produkt enthält, das für die Behandlung der Fasermaterialien eingesetzt werden soll.

Die erfindungsgemäßen Organooligo- oder Organopolysiloxane eignen sich sehr gut für die Behandlung von Fasermaterialien, wie z.B. Textilien in Form von Geweben, Gewirken oder nichtgewebten Flächengebilden (nonwovens). Den Fasermaterialien lassen sich hierdurch ein angenehm weicher Griff sowie - über die Auswahl entsprechender Verbindungen mit mehr oder weniger - CH₂-CH₂O- bzw. Polyoxypropylen-Einheiten - abgestufte Hydrophilieeigenschaften an ihrer Oberfläche verleihen. Insbesondere bei Verwendung von Siloxanen, in denen der Rest R''' bzw. R^{IV} eine Amidogruppe, einen Morpholinring oder einen Piperazlnring enthält, resultiert eine ausgesprochen niedrige Vergilbungsneigung. Weitere Beeinflussung des Griffs der Textilien ist möglich, indem man die erfindungsgemäßen Siloxane in Kombination mit Fettsäurealkanolamiden oder mit dispergierten Polyethylenwachsen einsetzt. Hierfür geeignete Produkte werden weiter unten beschrieben.

Für die Behandlung von Fasermaterialien werden erfindungsgemäße Organooligo- oder Organopolysiloxane vor allem in Form von Lösungen oder Dispersionen eingesetzt, die ggf. vor Gebrauch noch auf die erwünschte Konzentration verdünnt werden und denen ggf. weitere Mittel zugesetzt werden, welche für die Behandlung von Fasermaterialien üblich sind, wie z.B. Flammschutzmittel oder Cellulosevernetzer zur Verbesserung der Knittereigenschaften. Das Aufbringen der Dispersionen oder Lösungen auf die Fasermaterialien kann nach allgemein bekannten Methoden, z.B. über Foulard erfolgen.

Obwohl prinzipiell die erfindungsgemäßen Siloxane auch als Lösung oder Dispersion in einem organischen Lösungsmittel eingesetzt werden können, ist es aus Umwelt- und Kostengründen bevorzugt, sie in Form einer wäßrigen Lösung oder Dispersion zu verwenden; vorzugsweise werden zuerst wäßrige Lösungen oder Dispersionen mit 10 bis 50 Gew.%, in einigen Fällen auch bis zu 80 Gew.%, an Organooligo- oder Organopolysiloxan hergestellt, bezogen auf Gesamtdispersion bzw. Gesamtlösung. In dieser Form können Lösungen oder Dispersionen erfindungsgemäßer Produkte gelagert und transportiert bzw. an den Verbraucher ausgeliefert werden. Für den Einsatz bei der Behandlung von Fasermaterialien werden zweckmäßigerweise etwa 3 bis 50 g dieser Lösungen oder Dispersionen pro 1 Liter Wasser eingesetzt. Die im Einzelfall verwendete Menge hängt dabei von der Applikationstechnologie ab. Vor der Anwendung können diesen auf Gebrauchskonzentration verdünnten Flotten weitere Produkte zugesetzt werden, wie sie für die Behandlung von Fasermaterialien üblich sind.

Zur Dispergierung erfindungsgemäßer Siloxane (wenn diese nicht selbst-dispergierend oder löslich sind) in Wasser können bekannte Dispergatoren bzw. Emulgatoren verwendet werden, z.B. nichtionogene Dispergatoren aus der Gruppe ethoxilierter Alkohole oder ethoxilierter Fettsäuren. Die Dispergierung erfolgt mittels bekannter Methoden und Vorrichtungen. Vielfach ist es möglich, erfindungsgemäße Siloxane in Wasser so zu dispergieren, daß Mikroemulsionen entstehen. Diese Mikroemulsionen, die weitere Zusätze wie z.B. Fettsäurealkanolamide enthalten können, zeichnen sich dadurch aus, daß die dispergierten Stoffe in besonders feinverteilter Form vorliegen. Die Mikroemulsionen sind vielfach optisch klar und besitzen hervorragende Stabilität. Zu ihrer Herstellung können Verfahren angewandt werden, wie sie in EP-A 138 192 oder in WO 88/08436 beschrieben sind.

In bevorzugten Ausführungsformen enthalten die wäßrigen Lösungen oder Dispersionen außer erfindungsgemäßen Siloxanen noch einen oder mehrere der folgenden Bestandteile: Fettsäurealkanolamide, dispergierte Polyethylenwachse und Verbindungen der Formel (VII) 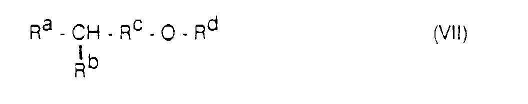 Diese Verbindungen der Formel VII werden unten näher erläutert.

Durch den Zusatz von einem oder mehreren Fettsäurealkanolamiden läßt sich der Griff von Textilien, die mit erfindungsgemäßen Dispersionen oder Lösungen behandelt werden, beeinflussen, d.h. ein besonders weicher Griff erhalten. Feftsäureaikanoamide sind zur Erzielung eines weichen Griffs bei Fasermaterialien bereits verwendet worden; in Kombination mit erfindungsgemäßen Siloxanen können Fettsäurealkanolamide in Form von Mikroemulsionen erhalten werden. Geeignete Fettsäurealkanolamide sind z.B. Monoalkanolamide oder Dialkanolamide der Formeln

R CON [(CH₂CH₂O-)ₖ- H]₂ und RCONH(CH₂CH₂O)ₖ H

wobei R einen gesättigten oder ungesättigten Kohlenwasserstoffrest mit 12 bis 18 Kohlenstoffatomen bedeutet und k für eine Zahl von 1 bis 10 steht. Geeignet sind auch Alkanolamide, die sich von aromatischen Carbonsäuren wie z.B. Salicylsäure, ableiten, Falls, wie in der erstgenannten Formel dargestellt, zwei solche Alkanolreste an den Stickstoff gebunden sind, kann k natürlich für den einen Rest einen anderen Wert aufweisen als für den anderen.

Fettsäurealkanolamide, welche sich als Zusätze zu Dispersionen erfindungsgemäßer Siloxane eignen, sind handelsübliche Produkte, wie sie sich z.B. durch Umsetzung der entsprechenden Fettsäuren mit Alkanolaminen erhalten lassen.

Der Griff von mit erfindungsgemäßen Mitteln behandelten Textilien läßt sich außer durch Zusatz von Fettsäurealkanolamiden auch durch Zusatz dispergierter Polyethylenwachse beeinflussen. Textilien weichen Griff mittels dispergierter Polyethylenwachse zu verleihen, ist bekannt, z.B. aus EP-A 0 412 324, US-A 42 11 815, DE-A 28 24 716, DE-A 19 25 993. Die dort beschriebenen dispergierten bzw. dispergierbaren Polyethylenwachse sind auch für erfindungsgemäße Dispersionen geeignet. Es handelt sich hierbei um chemisch modifizierte Polyethylene. Die Modifizierung besteht normalerweise in der Einführung saurer (-COOH)-Gruppen. Geeignete dispergierte oder dispergierbare Polyethylenwachse sind im Handel erhältlich.

Die Mengen an Fettsäurealkanolamid und/oder an Polyethylenwachs und/oder an einer oder mehreren Verbindungen der Formel VII, sie unten beschrieben werden, weiche den erfindungsgemäßen Dispersionen oder Lösungen zweckmäßigerweise zugesetzt werden. hängen von den gewünschten Eigenschaften (Griff behandelter Textilien), aber auch von den Stabilitäten der Dispersionen ab. Sie sind durch einfache Versuche leicht zu ermitteln.

Durch den Zusatz einer oder mehrerer Verbindungen, welche unter die Formel (VII) 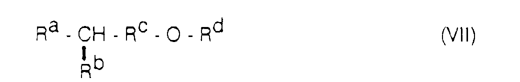 fallen, lassen sich vielfach Vorteile bezüglich der Eigenschaften erfindungsgemäßer Dispersionen erzielen. Diese Verbindungen können als Lösungsvermittler wirken. Es lassen sich so in vielen Fällen, abhängig von Art und Menge der Einzelkomponenten, hochkonzentrierte Dispersionen erhalten, die ohne Schwierigkeiten mit Wasser auf Gebrauchskonzentration verdünnt werden können, ohne daß beim Verdünnen ein Bereich durchlaufen wird, in dem eine Trennung der Dispersion in zwei Phasen erfolgt.

Eine bevorzugte Ausführungsform einer erfindungsgemäßen Dispersion bzw. Lösung besteht darin, daß sie zusätzlich zu einem Siloxan der Formel (I) eine Verbindung der oben aufgeführten Formel (VII) enthält, worin
R^{a} für H oder CH₃ steht
R^{b} für - OH oder -NH₂ steht
R^{c} für 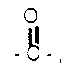 - CH₂ - oder
   für 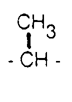 steht
R^{d} für einen unverzweigten oder verzweigten Alkylrest mit 1 bis 4 Kohlenstoffatomen steht, der eine OH- oder eine OR^{e}-Gruppe als Substituenten aufweisen kann,
R^{e} für einen unverzweigten oder verzweigten Alkylrest mit 1 bis 4 Kohlenstoffatomen steht, der eine OH-Gruppe als Substituenten aufweisen kann.

Besonders bevorzugte Verbindungen der Formel (VII) sind Methyllactat, Ethyllactat oder ein Ether, der sich durch Abspaltung von 1 Molekül Wasser aus 2 Molekülen Propylenglykol -(1,2) ableitet. Auch Gemische solcher Verbindungen (VII) können verwendet werden. Ether, die sich aus 2 Molekülen Propylenglykol-(1.2) durch Abspaltung von 1 Molekül Wasser ableiten, sind folgende Verbindungen:

CH₃ - CH (OH) - CH₂ - O - CH₂ - CH (OH) - CH₃

CH₃ - CH (OH) - CH₂ - O - CH (CH₃) - CH₂ OH

HO - CH₂ - CH (CH₃) - O - CH (CH₃) - CH₂ OH

Die Erfindung wird nunmehr durch Ausführungsbeispiele veranschaulicht.

### Beispiel 1 (erfindungsgemäß)

In einem Reaktionsgefäß wurde eine Mischung aus 36 g Dynasylan® 1411 (Fa. Hüls AG, DE), 2,23 kg Silikonöl Z 020 (Wacker-Chemie GmbH, DE), 12 g Wasser und 5 g 45 %igem Kaliumhydroxid eine Stunde unter Rückfluß gekocht. Anschließend wurden 120 g Tegopren® 5878 (Fa. Th. Goldschmidt AG, DE) zugegeben. Die Mischung wurde dann auf 110°C erhitzt und anschließend 5 Stunden unter Rückfluß gekocht.

Zur Herstellung einer wäßrigen Dispersion des so erhaltenen erfindungsgemäßen Polysiloxans wurden zu dem nach den obigen Angaben hergestellten Produkt nacheinander 6,94 kg Wasser, 280 g Genapol® X 080 (Fa. Hoechst AG, DE), 280 g 1.2-Propylenglykol und 90 g 60 %iger Essigsäure gegeben. Die erhaltene Mischung wurde zuerst voremulgiert und anschließend einer Hochdruckemulgierung bei 300 bar und bei etwa 70°C unterworfen.

Dynasylan® 1411 ist ein Produkt (ca. 100 % Aktivsubstanz) der Formel

H₂N (CH₂)₂ NH (CH₂)₃ Si(CH₃) (OCH₃)₂.

Tegopren® 5878 ist ein trimethylsilyl-endverschlossenes Oligosiloxan (ca. 100 % Aktivsubstanz) mit einer über eine Alkylengruppe an ein Si-Atom gebundenen Seitenkette, die etwa 12 Polyoxyethyleneinheiten enthält. Silikonöl Z 020 (ca. 100 % Aktivsubstanz) ist Hexamethylcyclotrisiloxan. Genapol® X 080 (ca. 100 % Aktivsubstanz) ist ein ethoxilierter lsotridecylalkohol.

### Beispiel 2 (nicht erfindungsgemäßes Vergleichsbeispiel)

Beispiel 1 wurde mit folgender Änderung wiederholt: Das Produkt Tegopren® 5878 wurde erst zu einem späteren Zeitpunkt zugegeben, nämlich erst zusammen mit Genapol X 080. Unter diesen Bedingungen reagiert Tegopren 5878 nicht mehr mit dem aus Dynasylan und Silikonöl Z 020 erhaltenen Produkt. Der Unterschied zwischen dem Produkt von Beispiel 1 und Beispiel 2 besteht also darin, daß in Beispiel 2 ein Polysiloxan vorliegt, an das keine Polyoxyethyleneinheiten gebunden sind und das mittels eines Polyoxyethylengruppen enthaltenden Dispergators (Tegopren) dispergiert ist. Im Produkt von Beispiel 1 dagegen liegt kein freies Tegopren oder zumindest keine nennenswerten Mengen an Tegopren vor.

Während bei Beispiel 1 eine stabile Dispersion erhalten wurde, trennte sich das nach Beispiel 2 erhaltene Produkt nach relativ kurzer Zeit in zwei Phasen.

### Beispiel 3

Mit einem gemäß Beispiel 1 erhaltenen Produkt und mit einem handelsüblichen aminofunktionellen Polysiloxan wurden Proben aus blau gefärbter Maschenware aus Polyester behandelt. Das handelsübliche Polysiloxan enthielt pro Siloxankette durchschnittlich mehrere Seitenketten, welche jeweils eine primäre Aminogruppe am Ende und eine sekundäre Aminogruppe in der Mitte dieser Seitenketten aufwiesen. Das handelsübliche Produkt enthielt keine Polyoxyalkylengruppen und enthielt etwa die 3,5-fache Menge an Stickstoff (in Gew. % N, bezogen auf Aktivsubstanz) im Vergleich zum erfindungsgemäßen Produkt gemäß Beispiel 1. Die Dispergierung des Handelsprodukts erfolgte in analoger Weise wie in Beispiel 2 angegeben, (d.h. unter Zusatz von Tegopren 5878 zusammen mit Genapol). Die weiteren Maßnahmen zur Emulgierung entsprachen denen von Beispiel 1 (Zugabe von Wasser, Essigsäure, Propylenglykol, Voremulgierung und Mikrohochdruckemulgierung). Die Dispersion des erfindungsgemäßen Produkts wies bei gleicher Menge an Aktivsubstanz eine erheblich niedrigere Trübungszahl auf, war also wesentlich transparenter als die Dispersion des Handelsprodukts. Die Reibechtheit der Polyesterprobe, die mit erfindungsgemäßer Dispersion behandelt wurde, war deutlich besser als die Reibechtheit der Vergleichsprobe, die mit der Dispersion des handelsüblichen Polysiloxans behandelt worden war.

### Beispiel 4: Herstellung einer erfindungsgemäßen Mikroemulsion

1,58 kg Silikonöl Z 020, 26 g Dynasylan® 1411, 8 g Wasser und 4 g 45 %iges Kaliumhydroxid wurden zusammen 1 Stunde unter Rückfluß gekocht. Nach Zugabe von 85 g Tegopren® 5878 wurde nochmals 30 Minuten unter Rückfluß gekocht.
Zu der entstandenen Mischung gab man 2,39 kg Wasser, kühlte auf 60°C und gab 375 g eines ethoxilierten (8 EO) Isotridecylalkohols und 15 g eines ethoxilierten (20 EO) Isotridecylalkohols zu. Anschließend wurden nacheinander 175 g eines Fettsäurediethanolamids (vorwiegend auf Basis von Stearinsäure), das noch etwas freies Diethanolamin enthielt, 75 g Kokosfettsäurepolyglykolester, 150 g Dipropylenglykol und 125 g 60 %iger Essigsäure zugegeben. Die Mischung wurde auf 70°C erwärmt und 15 Minuten bei dieser Temperatur gehalten. Nach Zugabe von 5 kg Wasser erhielt man eine stabile, leicht gelbilche Mikroemulsion.

## Patentansprüche

1. Stickstoff enthaltende Organooligo- oder Organopolysiloxane der allgemeinen Formel (I) 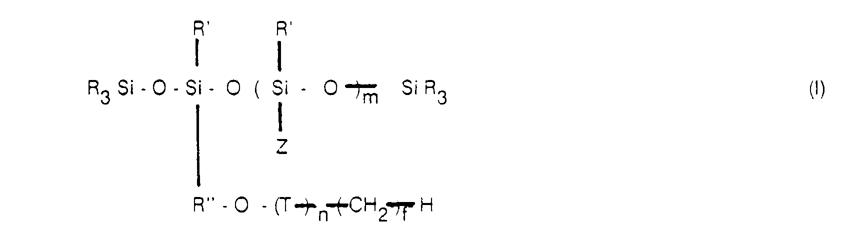
worin jeder Rest R entweder ein Methyl- oder ein Phenylrest ist,
worin R'' für einen zweiwertigen unverzweigten oder verzweigten organischen Rest mit 1 bis 6 C-Atomen, vorzugsweise für einen gesättigten Alkylenrest, insbesondere für - (CH₂-)₃ steht,
n eine Zahl von 5 bis 25 ist
m eine Zahl von 20 bis 1500 ist
f den Wert 0 oder 1 hat,
worin 60 bis 100 % aller anwesenden Reste T für -CH₂-CH₂ - O - und 0 bis 40 % aller anwesenden Reste T für 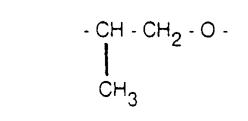 oder für 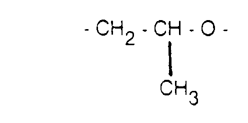 stehen,
alle Reste Z unabhängig voneinander entweder für R' oder für R''' oder für R^{IV} oder für R^{V} stehen, wobei R''' ein Rest der allgemeinen Formel (II a) oder der Formel (II b) und R^{IV} ein Rest der allgemeinen Formel (III) ist, 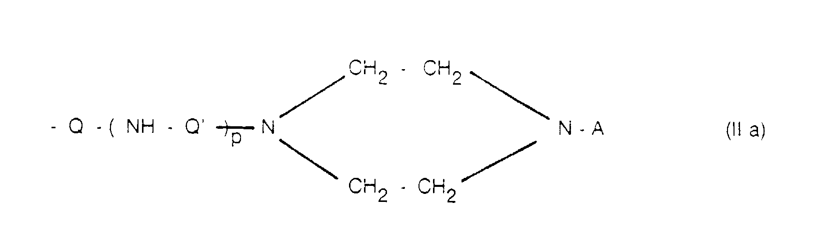 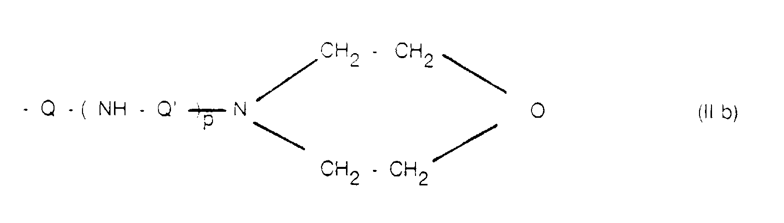 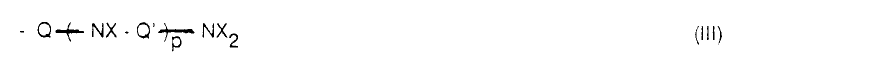 wobei A für Wasserstoff oder eine Alkylgruppe mit 1 bis 4 C-Atomen steht, worin Q und Q' jeweils für einen zweiwertigen unverzweigten oder verzweigten Alkylenrest mit 1 bis 4 C-Atomen stehen, worin p = 0 oder 1 ist und worin alle anwesenden Reste X unabhängig voneinander für Wasserstoff, einen, gegebenenfalls eine oder mehrere Hydroxylgruppen als Substituenten aufweisenden, Alkylrest mit 1 bis 6 C-Atomen, den Cyclohexylrest oder für den Rest - CO - Y stehen, wobei Y ein aliphatischer Rest mit 1 bis 6 C-Atomen ist, der eine oder mehrere Hydroxylgruppen als Substituenten aufweisen kann,
wobei R^{V} ein Rest der Formel 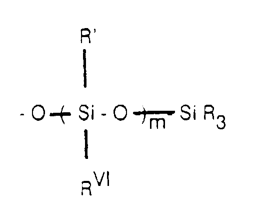 oder der Formel 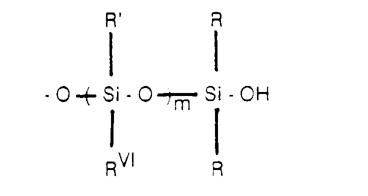 ist, worin alle anwesenden Reste R^{VI} unabhängig voneinander für R', R"', R^{IV} oder R^{V} stehen, mit der Maßgabe, daß mindestens einer der anwesenden Reste Z oder R^{VI} für einen Rest R"' oder für einen Rest R^{IV} steht,
wobei alle Reste R' jeweils für einen Rest R^{V} oder für einen Phenylrest oder Alkylrest mit 1 bis 4 C-Atomen. vorzugsweise für einen Methylrest oder Ethylrest stehen.

2. Siloxane nach Anspruch 1, dadurch gekennzeichnet, daß alle Reste R und R' sowie alle Reste Z, die nicht für R"'. R^{IV} oder R^{V} stehen, Methylgruppen sind.

3. Siloxane nach Anspruch 1 oder 2, dadurch gekennzeichnet, daß 25 bis 95 % aller anwesenden Reste Z Methylgruppen sind und die übrigen Reste Z Reste der Formel 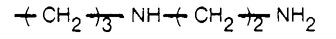 oder der Formel 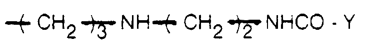 oder der Formel 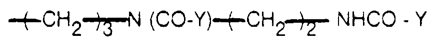 oder der Formel 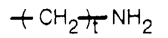 sind, wobei t für 2 oder 3 steht und Y die in Anspruch 1 angegebene Bedeutung besitzt.

4. Organooligosiloxan oder Organopolysiloxan gemäß einem oder mehreren der Ansprüche 1 bis 3 enthaltende Zusammensetzung, herstellbar dadurch, daß man in Gegenwart von Wasser
a) ein Stickstoff enthaltendes Silan der Formel 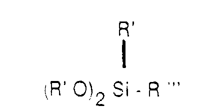 oder der Formel 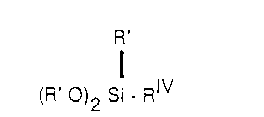
b) ein cyclisches Siloxan der Formel
(R'₂ Si O)ᵣ
und
c) ein Silan der Formel 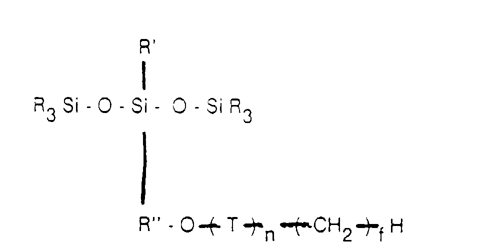 miteinander umsetzt, wobei R, R', R'', R''', R^{IV}, T, f und n die in Anspruch 1 angegebenen Bedeutungen besitzen und r für 3 oder 4 steht, die an Sauerstoff gebundenen Reste R' in Komponente a), jedoch nicht für R^{V} stehen, und wobei man gegebenenfalls dem Gemisch aus Wasser und den Komponenten a), b) und c) vor, während oder nach der Umsetzung einen Dispergator hinzufügt.

5. Zusammensetzung nach Anspruch 4, dadurch gekennzeichnet, daß die Umsetzung in Gegenwart einer Base durchgeführt wird.

6. Wäßrige Dispersion oder Lösung, welche ein Siloxan oder eine Zusammensetzung gemäß einem oder mehreren der Ansprüche 1 bis 5 enthält.

7. Dispersion oder Lösung nach Anspruch 6, dadurch gekennzeichnet, daß sie zusätzlich ein Fettsäurealkanolamid enthält.

8. Dispersion oder Lösung nach Anspruch 6 oder 7, dadurch gekennzeichnet, daß sie zusätzlich eine Verbindung der allgemeinen Formel (VII) enthält 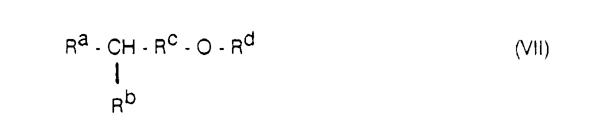 worin
R^{a} für H oder CH₃ steht
R^{b} für OH oder -NH₂ steht
R^{c} für 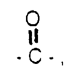 - CH₂ - oder
für 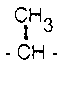 steht,
R^{d} für einen unverzweigten oder verzweigten Alkylrest mit 1 bis 4 Kohlenstoffatomen steht, der eine OH- oder eine OR^{e}-Gruppe als Substituenten aufweisen kann,
R^{e} für einen unverzweigten oder verzweigten Alkylrest mit 1 bis 4 Kohlenstoffatomen steht, der eine OH-Gruppe als Substituenten aufweisen kann.

9. Dispersion nach einem oder mehreren der Ansprüche 6 bis 8, dadurch gekennzeichnet, daß sie zusätzlich ein dispergiertes Polyethylenwachs enthält.

10. Verfahren zur Herstellung von Organooligo- oder Organopolysiloxan gemäß einem oder mehreren der Ansprüche 1 bis 3 wobei man in Gegenwart von Wasser
a) ein Stickstoff enthaltendes Silan der Formel 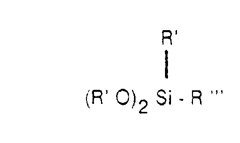 oder der Formel 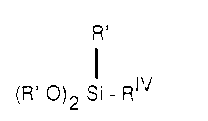
b) ein cyclisches Siloxan der Formel
(R'₂ Si O)ᵣ
und
c) ein Silan der Formel 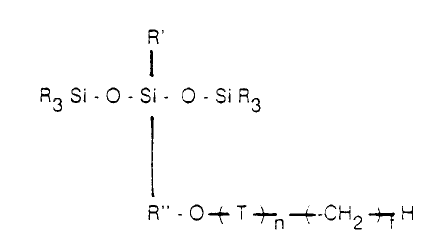 miteinander umsetzt, wobei R, R', R'', R''', R^{IV}, T, f und n die in Anspruch 1 angegebenen Bedeutungen besitzen und r für 3 oder 4 steht, die an Sauerstoff gebundenen Reste R' in Komponente a), jedoch nicht für R^{V} stehen.

11. Verfahren nach Anspruch 10, dadurch gekennzeichnet, daß man die Verbindungen a), b) und c) in solchen Mengenverhältnissen umsetzt, daß pro Mol an Komponente a) 1 bis 40 Mol Komponente b) und 0,5 bis 2 Mol Komponente c) eingesetzt werden.

12. Verfahren nach Anspruch 10 oder 11, dadurch gekennzeichnet, daß die Umsetzung in Gegenwart einer Base durchgeführt wird.

13. Verwendung einer Dispersion oder Lösung gemäß einem oder mehreren der Ansprüche 6 bis 9 zur Behandlung von Fasermaterialien.

## Claims

1. Nitrogen-containing organooligosiloxane or organopolysiloxane of the general formula (I) 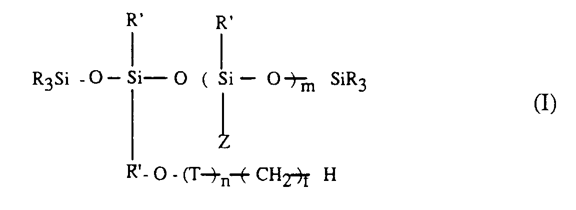
where each radical R is either a methyl or a phenyl radical,
where R" is a divalent, unbranched or branched organic radical containing 1 to 6 carbon atoms, preferably a saturated alkylene radical, in particular -(CH₂-)₃,
n is a number from 5 to 25,
m is a number from 20 to 1500,
f has the value 0 or 1,
where from 60 to 100 % of all radicals T present are -CH₂-CH₂-O-and from 0 to 40 % of all radicals T present are 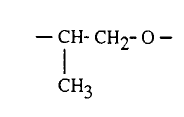 or are 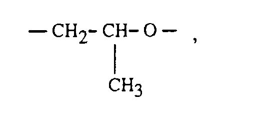
all radicals Z are, independently of one another, either R' or R"' or R^{IV} or R^{V}, R"' being a radical of the general formula (IIa) or (IIb) and R^{IV} being a radical of the general formula (III) 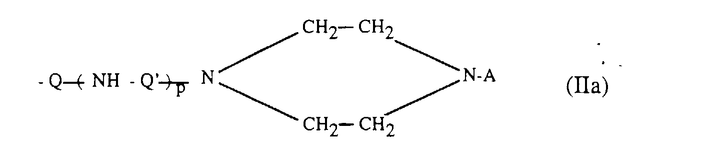 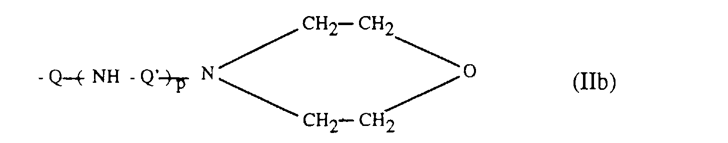 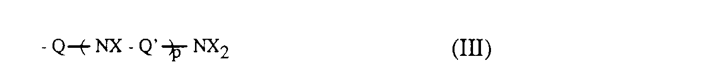
A being hydrogen or an alkyl group containing 1 to 4 carbon atoms, where Q and Q' are in each case a divalent, unbranched or branched alkylene radical containing 1 to 4 carbon atoms, where p = 0 or 1 and where all radicals X present are, independently of one another, hydrogen, an alkyl radical containing 1 to 6 carbon atoms, which may be substituted by one or more hydroxyl groups, or are the cyclohexyl radical or the radical -CO-Y, Y being an aliphatic radical containing 1 to 6 carbon atoms which can have one or more hydroxyl groups as substituents, R^{V} being a radical of the formula 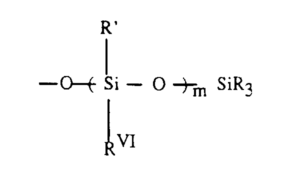 or of the formula 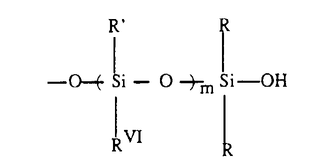
where all radicals R^{VI} present are, independently of one another, R', R"', R^{IV} or R^{V}, with the proviso that at least one of the radicals Z or R^{VI} present is a radical R"' or a radical R^{IV}, all radicals R' being in each case a radical R^{V} or a phenyl radical or alkyl radical containing 1 to 4 carbon atoms, preferably a methyl radical or ethyl radical.

2. Siloxane according to Claim 1, characterized in that all radicals R and R' and also all radicals Z that are not R"', R^{IV} or R^{V} are methyl groups.

3. Siloxane according to Claim 1 or 2, characterized in that from 25 to 95 % of all radicals Z present are methyl groups and the remaining radicals Z are radicals of the formula 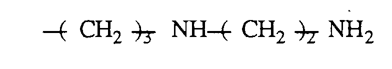 or of the formula 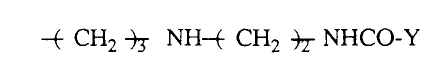 or of the formula 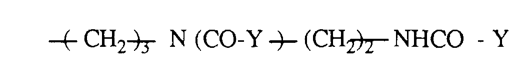 or of the formula 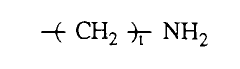 where t is 2 or 3 and Y has the meaning given in Claim 1.

4. Composition containing organooligosiloxane or organopolysiloxane according to one or more of Claims 1 to 3, which can be prepared by reacting together the following in the presence of water:
a) a nitrogen-containing silane of the formula 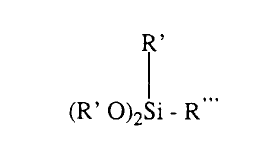 or of the formula 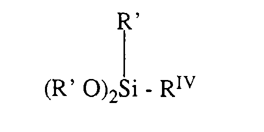
b) a cyclic siloxane of the formula
(R'₂Si O)ᵣ
and
c) a silane of the formula 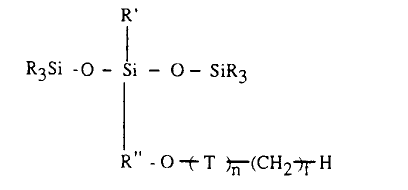 R, R', R", R''', R^{IV}, T, f and n having the meanings given in Claim 1, and r being 3 or 4, but where the radicals R' bonded to oxygen in component a) are not R^{V}, and a dispersant optionally being added to the mixture of water and the components a), b) and c) before, during or after the reaction.

5. Composition according to Claim 4, characterized in that the reaction is carried out in the presence of a base.

6. Aqueous dispersion or solution that contains a siloxane or a composition according to one or more of Claims 1 to 5.

7. Dispersion or solution according to Claim 6, characterized in that it additionally contains a fatty acid alkanolamide.

8. Dispersion or solution according to Claim 6 or 7, characterized in that it additionally contains a compound of the general formula (VII) 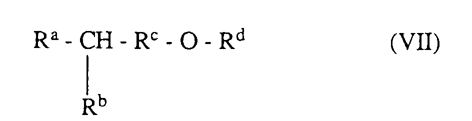 where
R^{a} is H or CH₃,
R^{b} is -OH or -NH₂,
R^{c} is 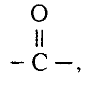 -CH₂- or 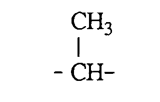
R^{d} is an unbranched or branched alkyl radical containing 1 to 4 carbon atoms, which may have an OH group or an OR^{e} group as substituents,
R^{e} is an unbranched or branched alkyl radical containing 1 to 4 carbon atoms, which may have an OH group as substituent.

9. Dispersion according to one or more of Claims 6 to 8, characterized in that it additionally contains a dispersed polyethylene wax.

10. Process for preparing an organooligosiloxane or organopolysiloxane according to one or more of Claims 1 to 3, characterized in that the following are reacted together in the presence of water:
a) a nitrogen-containing silane of the formula 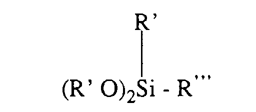 or of the formula 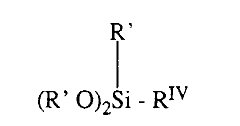
b) a cyclic siloxane of the formula
(R'₂SiO)ᵣ
and
c) a silane of the formula 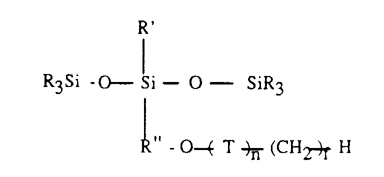 R, R', R", R''', R^{IV}, T, f and n having the meanings given in Claim 1, and r being 3 or 4, but where the radicals R' bonded to oxygen in component a) are not R^{V}.

11. Process according to Claim 10, characterized in that the compounds a), b) and c) are reacted in quantitative ratios such that from 1 to 40 mol of component b) and from 0.5 to 2 mol of component c) are used per mole of component a).

12. Process according to claim 10 or 11, characterized in that the reaction is carried out in the presence of a base.

13. Use of a dispersion or solution according to one or more of Claims 6 to 9 for treating fibre materials.

## Revendications

1. Organo oligosiloxanes ou organo polysiloxanes, contenant de l'azote et répondant à la formule générale (I) 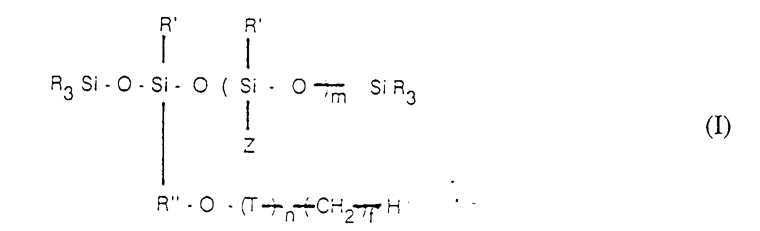
dans laquelle chaque reste R représente un reste méthyle ou un reste phényle;
R'' représente un reste organique divalent, non ramifié ou ramifié, comportant 1 à 6 atomes de carbone, avantageusement un reste alkylène saturé, notamment le reste -(CH₂)₃-
n est un nombre valant 5 à 25
m est un nombre valant 20 à 1500
f vaut 0 ou 1,
60 à 100% de tous les restes T présents représentent -CH₂-CH₂-O- et 0 à 40 % de tous les restes T présents représentent 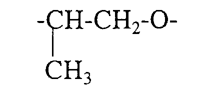
ou 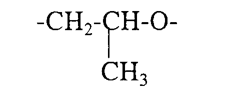
tous les restes Z représentent chacun, indépendamment l'un de l'autre, R' ou R''' ou R^{IV} ou R^{V}, R"' représentant un reste de formule générale (IIa) ou de formule (IIb) et R^{IV} représentant un reste de formule générale (III): 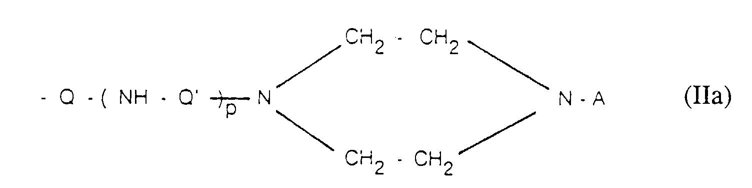 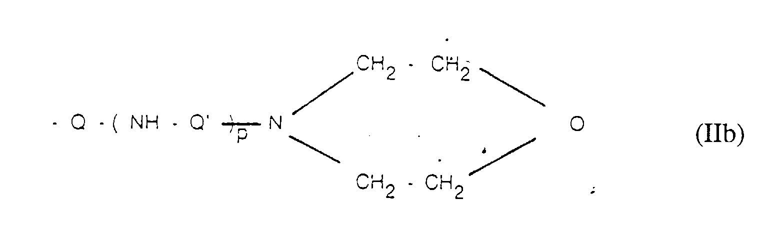 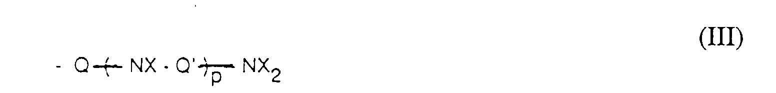
A représente un atome d'hydrogène ou un groupe alkyle ayant 1 à 4 atomes de carbone; Q et Q' représentent chacun un reste alkylène divalent, non ramifié ou ramifié, ayant 1 à 4 atomes de carbone; p vaut 0 ou 1 et tous les restes X présents représentent chacun, indépendamment l'un de l'autre, un atome d'hydrogène, un reste alkyle ayant 1 à 6 atomes de carbone et comportant éventuellement 1 ou plusieurs groupes hydroxyles comme substituants, le reste cyclohexyle ou le reste -CO-Y, Y étant un reste aliphatique comportant 1 à 6 atomes de carbone qui peut présenter un ou plusieurs groupes hydroxyles comme substituants;
R^{V} représente un reste de formule: 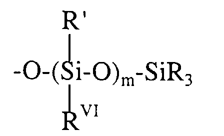 ou de formule 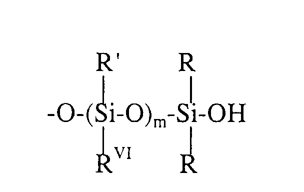 où tous les restes R^{VI} présents représentent chacun, indépendamment l'un de l'autre, R', R"', R^{IV} ou R^{V}, pourvu que l'un au moins des restes présents Z ou R^{VI} représente un reste R''' ou un reste R^{IV},
tous les restes R' représentant chacun un reste R^{V} ou un reste phényle ou un reste alkyle ayant 1 à 4 atomes de carbone, avantageusement un reste méthyle ou un reste éthyle.

2. Siloxanes selon la revendication 1, caractérisés en ce que tous les restes R et R' ainsi que tous les restes Z, ne représentant pas R''', R^{IV} ou R^{V}, représentent des groupes méthyle.

3. Siloxanes selon la revendication 1 ou 2, caractérisés en ce que 25 à 95% de tous les restes Z présents représentent des groupes méthyle, et les autres restes Z représentent les restes de formule 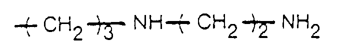 ou de formule 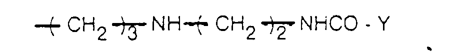 ou de formule 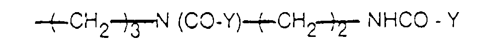 ou de formule 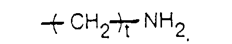 t valant 2 ou 3 et Y ayant le sens indiqué à la revendication 1.

4. Composition contenant de l'organo oligosiloxane ou de l'organo polysiloxane selon une ou plusieurs des revendications 1 à 3, que l'on peut préparer en faisant réagir ensemble, en présence d'eau :
a) un silane contenant de l'azote et répondant à la formule: 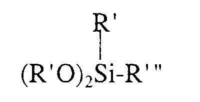 ou à la formule 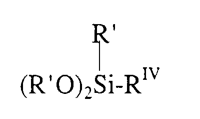
b) un siloxane cyclique de formule
(R'₂SiO)ᵣ
et
c) un silane de formule 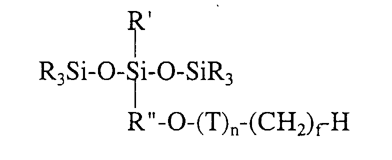 les symboles R, R', R", R''', R^{IV}, T, f et n ayant les sens indiqués à la revendication 1 et r valant 3 ou 4; les restes R' fixés sur de l'oxygène dans le composant a), ne représentant cependant pas R^{V}, et en introduisant éventuellement avant, pendant ou après la réaction, un dispersant dans le mélange d'eau et des constituants a), b), et c).

5. Composition selon la revendication 4, caractérisée en ce qu'on conduit la réaction en présence d'une base.

6. Dispersion ou solution aqueuse qui contient un siloxane ou une composition selon une ou plusieurs des revendications 1 à 5.

7. Dispersion ou solution selon la revendication 6, caractérisée en ce qu'elle contient en outre un alcanol amide d'acide gras .

8. Dispersion ou solution selon la revendication 6 ou 7, caractérisée en ce qu'elle contient en outre un composé de formule générale (VII) 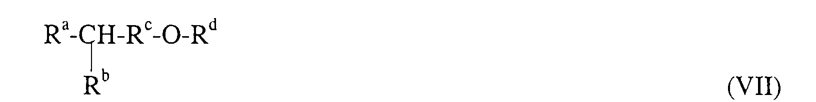 dans laquelle
R^{a} représente H ou CH₃ ,
R^{b} représente -OH ou -NH₂ ,
R^{c} représente 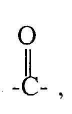 -CH₂- ou 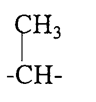
R^{d} représente un reste alkyle non ramifié ou ramifié comportant 1 à 4 atomes de carbone, pouvant présenter un groupe OH ou OR^{e} comme substituant,
R^{e} représente un reste alkyle non ramifié ou ramifié, comportant 1 à 4 atomes de carbone, qui peut présenter un groupe OH comme substituant.

9. Dispersion selon une ou plusieurs des revendications 6 à 8 , caractérisée en ce qu'elle contient en outre une cire de polyéthylène dispersée.

10. Procédé de préparation d'un organo oligosiloxane ou d'un organo polysiloxane selon une ou plusieurs des revendications 1 à 3, selon lequel on fait réagir ensemble, en présence d'eau :
a) un silane contenant de l'azote, de formule 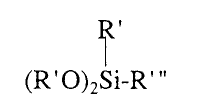 ou de formule 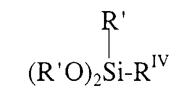
b) un siloxane cyclique de formule
(R'₂SiO)ᵣ
et
c) un silane de formule 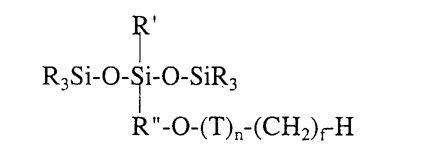 les symboles R, R', R", R''', R^{IV}, T, f et n ayant les sens indiqués à la revendication 1, et r valant 3 ou 4; les restes R' fixés sur de l'oxygène dans le constituant a) ne représentant cependant pas R^{V}.

11. Procédé selon la revendication 10, caractérisé en ce qu'on utilise les composés a), b) et c) en des rapports tels que, par mole du constituant a), on utilise 1 à 40 moles du constituant b) et 0,5 à 2 moles du constituant c).

12. Procédé selon la revendication 10 ou 11, caractérisé en ce qu'on conduit la réaction en présence d'une base.

13. Utilisation d'une dispersion ou solution selon une ou plusieurs des revendications 6 à 9, pour le traitement de matières fibreuses.
